(19) Europäisches Patentamt
European Patent Office
Office européen des brevets

(11) Numéro de publication: **0 099 781**
**B1**

(12) # FASCICULE DE BREVET EUROPEEN

(45) Date de publication du fascicule du brevet: **13.05.87**

(51) Int. Cl.[4]: **F 16 D 55/224**

(21) Numéro de dépôt: **83401316.1**

(22) Date de dépôt: **24.06.83**

(54) **Elément de coulissement et de verrouillage élastique pour frein à disque à étrier flottant supporté sur une colonnette axiale unique, et frein à disque équipé d'un tel élément.**

(30) Priorité: **28.06.82 FR 8211273**

(43) *Date de publication de la demande:*
**01.02.84 Bulletin 84/5**

(45) Mention de la délivrance du brevet:
**13.05.87 Bulletin 87/20**

(84) Etats contractants désignés:
**DE GB IT SE**

(56) Documents cités:
**EP - A - 0 030 502**
**EP - A - 0 036 368**
**EP - A - 0 054 496**
**DE - A - 2 713 360**
**GB - A - 2 060 093**
**US - A - 4 181 200**

(73) Titulaire: **BENDIX France, 126, rue de Stalingrad, F-93700 Drancy (FR)**

(72) Inventeur: **Carré, Jean-Jacques, 59 bld de l'Est, F-93340 Le Raincy (FR)**
Inventeur: **Courbot, Pierre, 1 bis rue d'Hérivaux, F-95400 Villiers Le Bel (FR)**
Inventeur: **Mery, Jean-Claude, 61 rue Emile Zola, F-93320 Pavillons-sous-Bois (FR)**

(74) Mandataire: **Le Moenner, Gabriel et al, SERVICE BREVETS BENDIX 44, Rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention concerne les freins à disque et, plus particulièrement, les éléments de coulissement et de verrouillage élastiques pour freins à disque du type à étrier flottant monté à coulissement sur un support fixe au moyen d'une colonnette axiale unique solidaire de l'étrier ou du support fixe, l'élément de coulissement et de verrouillage élastique étant insérable entre une extrémité de l'étrier opposée à la colonnette et une partie adjacente du support fixe en étant solidarisé à une premier de la paire d'organes constituée de cette extrémité de l'étrier et de cette partie adjacente du support fixe pour coopérer au guidage en coulissement des deux organes l'un par rapport à l'autre via une partie d'engagement comportant des zones de contact opposées portant en contact contre des zones de coulissement adjacentes de chacun de ces deux organes dans la position normale de fonctionnement du frein, au moins cette partie d'engagement de l'élément de coulissement et de verrouillage étant susceptible d'être effacée élastiquement pour permettre le basculement de l'étrier autour de la colonnette au voisinage de cette position normale de fonctionnement.

La structure générale d'un frein à disque à étrier flottant coulissant sur une colonnette unique est décrit dans la demande de brevet européen 0 030 502 au nom de la demanderesse, dont le contenu est supposé intégré ici pour référence.

Un frein à disque de ce type, pourvu d'un élément de coulissement et de verrouillage élastique du type ci-dessus défini fait par ailleurs l'objet de la demande de brevet européen 0 036 368, également au nom de la demanderesse. Dans ce document, l'élément de coulissement et de verrouillage élastique, avec lequel coopèrent à coulissement des faces d'appui antagonistes et décalées axialement de l'étrier et du support fixe, est constitué par un ressort à fil métallique et cylindrique ayant une extrémité fixée sur le côté intérieur de l'étrier et une partie rectiligne courant tout le long de l'extrémité de l'étrier opposée à la colonnette unique de façon à présenter une extrémité de bras libre susceptible d'être effacée ou écartée vers l'étrier lors du basculement de celui-ci vers sa position normale de fonctionnement en coopérant avec une surface de rampe formée sur une partie en saillie, adjacente à cette extrémité de l'étrier, du support fixe. L'extrémité libre du bras latéral du ressort est bloquée en position d'engagement avec la face d'appui de la partie en saillie du support fixe par une goupille de sécurité. Quoique donnant toute satisfaction, cet agencement présente l'inconvénient que les zones de contact entre les zones de coulissement de l'étrier et du support fixe et le fil de ressort intercalé entre ces dernières se limitent à des génératrices du fil cylindrique du ressort, lequel peut ainsi entailler le matériau de l'étrier, généralement constitué en alliage léger, par exemple en aluminium. De plus, la mise en place du ressort impose une configuration particulière de l'extrémité de l'étrier, la goupille constituant en outre un élément additionnel qui doit être mis en place ou enlevé pour réaliser la mise en place par encliquetage de étrier ou son relèvement ultérieur, par exemple pour le changement des plaquettes de frein.

Il a, par ailleurs, été proposé dans le brevet britannique 1 532 572 un agencement pour une structure de frein du type évoqué ci-dessus et mettant en œuvre, selon une technique bien connue dans les freins à disque classiques à étrier flottant, une clavette de retenue interposée entre l'extrémité de l'étrier et la partie adjacente du support fixe, assurant ainsi des surfaces de coulissement optimales entre ces deux organes. Toutefois, le démontage de cette clavette impose une extraction des deux goupilles de sécurité à ses deux extrémités et l'extraction par translation axiale de la clavette.

Le document DE-A 2 713 360 décrit un élément de coulissement et de verrouillage élastique, en tôle, notamment pour frein à disque à étrier coulissant et basculant, comportant une partie principale profilée plaquée élastiquement sur le bord latéral de l'étrier et au moins une patte d'ancrage logée élastiquement dans une fenêtre intérieure formée dans la voûte du support fixe, dans un agencement ne permettant pas une solidarisation de l'élément à l'un ou l'autre des organes adjacents ni un positionnement rapide et efficace de l'étrier vis à vis du support fixe, et risquant en outre de poser des problèmes de mauvaise installation de l'élément de coulissement et de verrouillage vis à vis desdits organes entre lesquels il est disposé, pouvant induire un disfonctionnement du frein.

La présente invention a pour objet de proposer un élément de coulissement et de verrouillage élastique pour freins à disque du type défini plus haut, de structure simple, permettant une mise en place opérationnelle et un effacement simplifiées de fonctionnement fiable et assurant des surfaces de coulissement améliorées entre l'étrier et le support fixe.

Pour ce faire, selon une caractéristique de l'invention, l'élément de coulissement ou de verrouillage élastique est réalisé à partir d'une feuille d'acier à ressort, la partie d'engagement de cet élément étant constituée d'une surface de lame plane de coulissement, dont les faces opposées forment lesdites zones de contact, reliée à une extrémité d'une zone de lame intermédiaire dont l'autre extrémité est reliée à une partie de corps de l'élément permettant sa solidarisation au premier organe, la zone de lame intermédiaire formant surface de rampe inclinée flexible s'écartant de la partie de corps et agencée de façon à coopérer avec le second organe (étrier ou support fixe) pour réaliser automatiquement l'effacement de la partie d'engagement dans la direction vers la partie de corps lors du basculement de l'étrier vers sa position normale de fonctionnement.

Avec cet agencement, la partie d'engagement plane de l'élément, avec les faces opposées de laquelle coopèrent à coulissement les zones de coulissement de l'étrier et du support fixe, joue le rôle d'une clavette en faisant partie intégrante d'un élément assurant en outre la fonction de verrouillage élastique permettant une mise en place, en fin de basculement, par simple encliquetage de l'étrier, tout en autorisant, par simple déflection de la zone de lame intermédiaire, par exemple au moyen d'un tournevis, l'effacement de la partie d'engagement pour désolidariser ainsi l'extrémité de l'étrier du support fixe et permettre le basculement de l'équipage de l'étrier et des patins autour de la colonnette unique.

La présente invention a pour autre objet de proposer un frein à disque du type défini ci-dessus, de structure simple et de fonctionnement fiable, agencé pour recevoir ledit élément de coulissement et de verrouillage élastique.

Pour ce faire, selon une caractéristique de l'invention, dans un frein à disque du type défini ci-dessus, où l'étrier comporte une partie faisant saillie vers l'extérieur à partir de ladite extrémité de l'étrier au voisinage de ladite partie adjacente du support fixe et formant ladite zone de coulissement de l'étrier, la partie de corps de l'élément de coulissement et de verrouillage élastique est montée sur le premier organe de façon que la zone intermédiaire formant surface de rampe inclinée flexible s'étende au voisinage de la partie en saillie de l'étrier dans la direction vers le second organe, avec lequel cette zone intermédiaire flexible peut ainsi coopérer pour fléchir lors du basculement de l'étrier vers sa position de fonctionnement, en assurant ainsi une mise en place automatique, avec verrouillage, de l'étrier.

D'autres caractéristiques et avantages de la présente invention ressortiront de la description suivante de modes de réalisation, donnés à titres illustratifs mais nullement limitatif, faite en relation avec des dessins annexés, sur lesquels:

- La Figure 1 est une vue en perspective d'un premier mode de réalisation d'un élément de coulissement et de verrouillage élastique selon l'invention;
- La Figure 2 représente un frein à disque selon l'invention équipé de l'élément de coulissement et de verrouillage de la Figure 1;
- La Figure 3 est une vue du dessus partiellement en coupe, du frein de la Figure 2;
- La Figure 4 est une vue en face partielle du côté intérieur du frein de la Figure 3;
- La Figure 5 est une vue de face partielle du côté extérieur du frein de la Figure 3;
- La Figure 6 est une vue schématique du dessus de la zône d'implantation de l'élément de la Figure 1 dans un frein selon les Figures 2 à 5 équipé de garnitures neuves;
- La Figure 7 est une vue similaire après déplacement de l'étrier consécutif à une usure des garnitures de patins;
- La Figure 8 est une vue en perspective d'un second mode de réalisation de l'élément selon l'invention;
- La Figure 9 est une vue en perspective d'un troisième mode de réalisation de l'élément selon l'invention;
- La Figure 10 est une vue en coupe transversale d'un frein selon l'invention équipé de l'élément de la Figure 9;
- La Figure 11 est une vue de face, partiellement en coupe, analogue à la Figure 4, du frein de la Figure 10;
- La Figure 12 est une vue en coupe suivant le plan 12-12 de la Figure 11;
- La Figure 13 est une vue en perspective d'un quatrième mode de réalisation de l'élément selon l'invention;
- La Figure 14 est une vue schématique, analogue à la Figure 2, d'un frein équipé de l'élément de la Figure 13;
- La Figure 15 est une vue est en perspective d'un cinquième mode de réalisation de l'élément selon l'invention;
- La Figure 16 est une vue est schématique analogue à la Figure 14 d'un frein équipé de l'élément de la Figure 15;
- La Figure 17 est une vue schématique du dessus, analogue à la Figure 6, montrant la zône d'implantation de l'élément dans le frein de la Figure 16; et
- La Figure 18 est une vue schématique en bout, analogue à la Figure 4, de l'implantation de l'élément selon la Figure 15 et illustrant la façon dont cet élément, de même que ceux des autres modes de réalisation, peut être aisément effacé pour permettre le basculement de l'étrier.

Dans la description qui va suivre et sur les dessins, les éléments identiques ou analogues portent les mêmes chiffres de référence, éventuellement indicés.

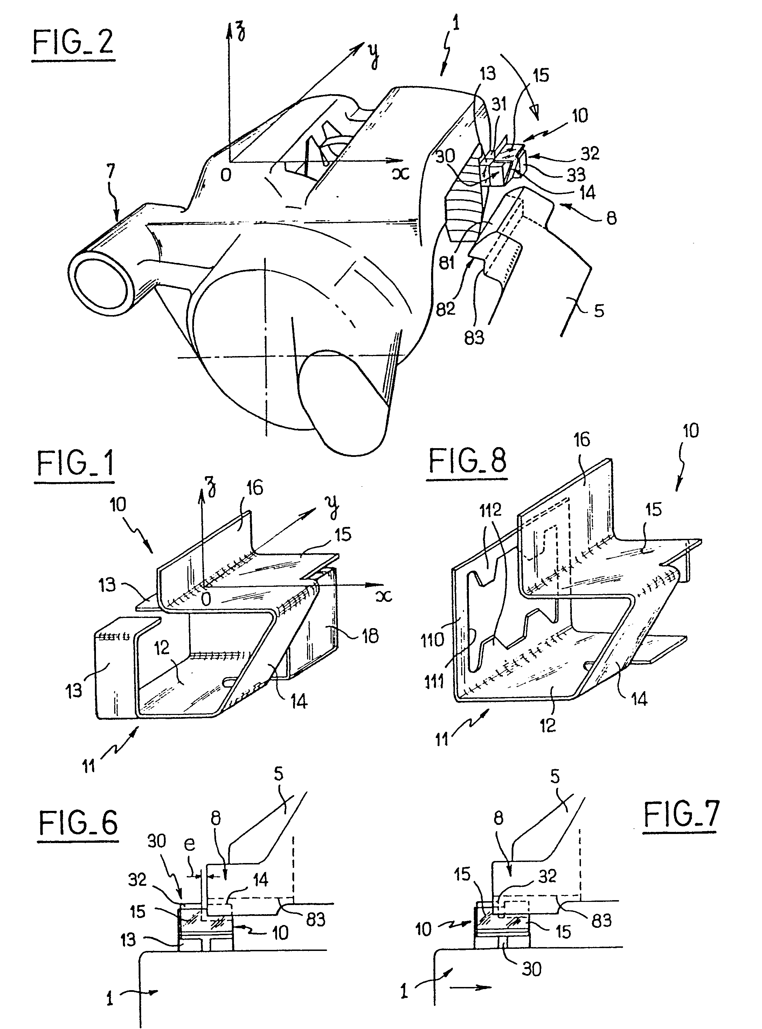

Comme représenté sur les Figures, un frein à disque du type à étrier flottant monté à coulissement sur une colonnette axiale unique selon l'invention comprend essentiellement une structure d'étrier 1 dans lequel sont montés, de part et d'autre d'un disque tournant 2, des patins de friction 3, 3', et incorporant un piston hydraulique 4 sollicitant le patin intérieur 3' contre le disque 2 et, par réaction, le patin extérieur 3 contre l'autre face du disque. L'étrier 1 est monté à coulissement sur un support fixe 5, par exemple une chappe, au moyen d'une colonnette axiale unique 6 solidarisée à l'étrier ou au support fixe et reçue à coulissement dans un logement du tubulaire 7 de la structure du support fixe ou de l'étrier. Sur les Figures 2, 10, 14 et 16, la colonette est fixée sur la structure support fixe 5 tandis que, en variante, sur la Figure 3, cette colonnette 6 est représentée fixée à l'étrier 1. L'extrémité de l'étrier opposée à la colonnette 6 est normalement disposée au voisinage d'une partie adjacente 8 de la structure support 5, ces deux organes adjacents étant agencés pour coopérer avec un élément de coulissement et de verrouillage élastique 10 selon la présente invention.

A cette fin, la partie adjacente de la structure support 5 comporte, légèrement en retrait du bras extérieur de l'étrier 1, une partie en saillie 8 s'étendant axialement au voisinage de l'extrémité adjacente de l'étrier. Cette partie en saillie 8 du support 5 comporte une surface supérieure inclinée 81, divergeant vers le haut à l'écart de l'étrier, prolongée, vers le bas, par un décrochement définissant une surface de coulissement faisant face vers le bas 82 et s'étendant dans un plan sensiblement horizontal parallèle à l'axe du disque de frein matérialisé par les axes Ox et Oy et une surface de butée en retrait 83 s'étendant dans un plan sensiblement perpendiculaire au plan horizontal sus-mentionné et matérialisé par les axes Oy et Oz.

Dans le modes de réalisation des Figures 1 à 7 et 13 et 14, l'extrémité de l'étrier 1 opposée à la colonnette 6 comporte uen partie en saillie 30 s'étendant vers l'extérieur dans la direction opposée à la colonnette 6 et comportant une surface supérieure plane 31 agencée de façon à s'étendre, en position normale de fonctionnement du frein, dans un plan horizontal xy sensiblement confondu avec le plan horizontal de la face 82 de la saillie 8 du support fixe 5, comme on le voit mieux sur les Figures 4 et 5. Dans ces modes de réalisation, la partie en saillie 30 de l'étrier comporte une zone d'implantation épaissie de configuration cubique ayant une longueur, dans la direction vers l'extérieur, inférieure à la distance séparant normalement l'extrémité de l'étrier du bord de la partie en saillie 8 du support fixe 5 tel que défini par les surfaces 81 et 82.

La partie en saillie 30 comporte une extrémité 32 se prolongement vers l'extérieur latéralement par rapport à la partie en saillie 8 du support 5, un jeu e étant normalement prévu entre la face latérale interne de l'extrémité 32 et la face latérale externe adjacente de la partie en saillie 8 lorsque la frein est équipé de garnitures neuves, comme on le voit sur la Figure 3. L'extrémité 32 est terminée par une face frontale 33 s'étendant, dans la position normale de fonctionnement du frein, dans un plan parallèle au plan yz et donc à la face en retrait 83 de la partie en saillie 8 du support fixe 5, l'extension vers l'extérieur de l'extrémité 32 de la partie en saillie 30 dans la direction x étant inférieure à la distance séparant normalement, dans cette direction x, la face en retrait 83 de l'extrémité adjacente de l'étrier 1. De cette façon, dans la position normale de fonctionnement, au fur et à mesure de l'usure des garnitures du frein, lorsque l'étrier se déplace par rapport au support fixe 5, la partie en saillie 30 peut s'engager dans le décrochement formé par les faces 82 et 83 de la partie en saillie 8 du support 5, comme représenté schématiquement sur la Figure 7.

Dans le mode réalisation de l'élément de coulissement et de verrouillage 10 selon l'invention représenté sur les Figures 1 à 7, celui-ci comporte une partie de corps 11 de configuration sensiblement cubique avec un voile de fond 12, deux pattes arrière repliées en forme de U fermé 13, le voile de fond 12 étant prolongé extérieurement par une zone de lame intermédiaire 14 de largeur réduite (dans la direction y) s'étendant vers le haut et vers l'extérieur dans la direction opposée aux pattes 13 (dans la direction x) pour former une surface de rampe inclinée et flexible, cette zone de lame intermédiaire 14 se prolongeant à son tour, à son extrémité supérieure, par une surface de lame plane 15 s'étendant dans un plan parallèle à celui du voile de fond 12 sur toute la largeur (dans la direction y) de l'élément 10. La surface de lame 15 est, à son tour, prolongée par une partie d'extrémité 16 repliée vers le haut pour s'étendre dans un plan sensiblement perpendiculaire à celui de la surface de lame 15. L'ensemble de l'élément 10 est réalisée d'une seule pièce à partir d'une lame d'acier inoxydable à ressort découpée et mise en forme dans la configuration représentée. Cet élément 10 est mis en place sur la partie en saillie 30 de l'étrier de la façon représentée, c'est-à-dire en insérant élastiquement la partie de corps 11 sur la base de la partie en saillie 30, la zône de lame intermédiaire 14 s'étendant ainsi au voisinage de l'extrémité 32 de la partie en saillie et la surface de lame plane 15 s'étendant dans un plan parallèle à celui de la surface supérieure 31 de la partie en saillie 30, légèrement au-dessus de celle-ci. Comme on le voit sur les Figures 6 et 7, l'extension dans la direction x de la surface de lame plane 15 est telle que, l'élément 10 étant monté sur la partie en saillie 30 de l'étrier, la surface de lame 15 s'étend au-delà, vers l'extérieur, du bord de la partie en saillie 8 du support 5 défini par les faces 81 et 82. Toutefois, conformément à l'invention, lors du basculement de l'étrier 1 autour de la colonnette 6 dans le sens de sa mise en place vers la position normale de fonctionnement, représenté par la flèche sur la Figure 2, la zone de lame intermédiaire 14 formant surface de rampe vient porter contre le bord de la partie en saillie 8 et fléchit autour de sa zône de raccordement inférieur avec le voile de fond 12 dans la direction vers l'étrier pour effacer ainsi la surface de lame plane 15 et permettre le complet basculement vers le bas de l'étrier. Par contre, dès que le plan de la surface de lame plane 15 a franchi l'arête entre les faces 81 et 82, de par l'élasticité du matériau de l'élément 10 la surface de lame 15 recouvre sensiblement la position initiale en contact d'engagement coulissant avec la face de coulissement 82 de la partie en saillie 8, comme on le voit sur les Figures 4 et 5. Conformément à l'objet de l'invention, l'élément 10 assure ainsi le verrouillage automatique de l'étrier 1 dans sa position normale de fonctionnement par rapport à l'extrémité adjacente 8 du support fixe 5 tandis que la surface de lame plane 15, insérée entre la face supérieure 31 de la partie en saillie 30 de l'étrier et la face 82 de la partie en saillie 8 du support 5, qui coopèrent avec les faces opposées de la surface de lame 15, joue le rôle d'une clavette de coulissement «pontant» les deux organes mobiles l'un par rapport à l'autre dans la configuration de départ avec le frein pourvu de garnitures neuves, de même que, ultérieurement, au fur et à mesure de l'usure des garnitures, lorsque la partie en saillie 30 de l'étrier vient s'engager sous la face 82 de la partie en saillie 8. Dans cette dernière configuration, pour éviter la mise en biais de l'étrier lors de son déplacement, la partie en saillie 30 de l'étrier est dimensionnée de façon que la face frontale 33 de l'extrémité 32 de cette partie en saillie vienne en appui sur la face de butée en retrait 83 de la partie en saillie 8 de la structure support. Dans un mode de réalisation préférentiel, pour éviter, dans ces conditions, le matage de l'extrémité 32 de la partie en saillie (réalisée en alliage léger, alors que la structure support 5 est réalisée par exemple en fonte), la partie de corps 11 de l'élément 10 comporte une patte 18 rabattue vers le haut à partir du voile de fond 12 à côté de la zône de lame flexible 14 et s'interposant ainsi entre la face frontale 33 et la face de butée 83.

Le monde de réalisation de l'élément 10 représenté sur la Figure 8 diffère de celui précédemment décrit dans la mesure où la partie de corps 11, au lieu de former une cage prismatique enfilée sur la partie en saillie 30 de l'étrier 1, se prolonge, à l'opposé de la zone de lame flexible 14, par un voile 110 replié vers le haut par rapport au voile de fond 12 (et, donc, parallèle à la partie d'extrémité 16, à distance de cette dernières). Dans la partie de voile 110 est découpée une lumière 111 d'allure généralement rectangulaire avec des pattes 112 s'étendant vers l'intérieur et servant d'appui élastique lors du montage en force de la partie en saillie 30 dans la découpe 111. Comme dans le mode de réalisation précédent, la partie de voile 12 peut être pourvue d'une patte rabattue vers le haut 18 venant s'étendre devant la face frontale 33 de l'extrémité 32 de la partie en saillie 30.

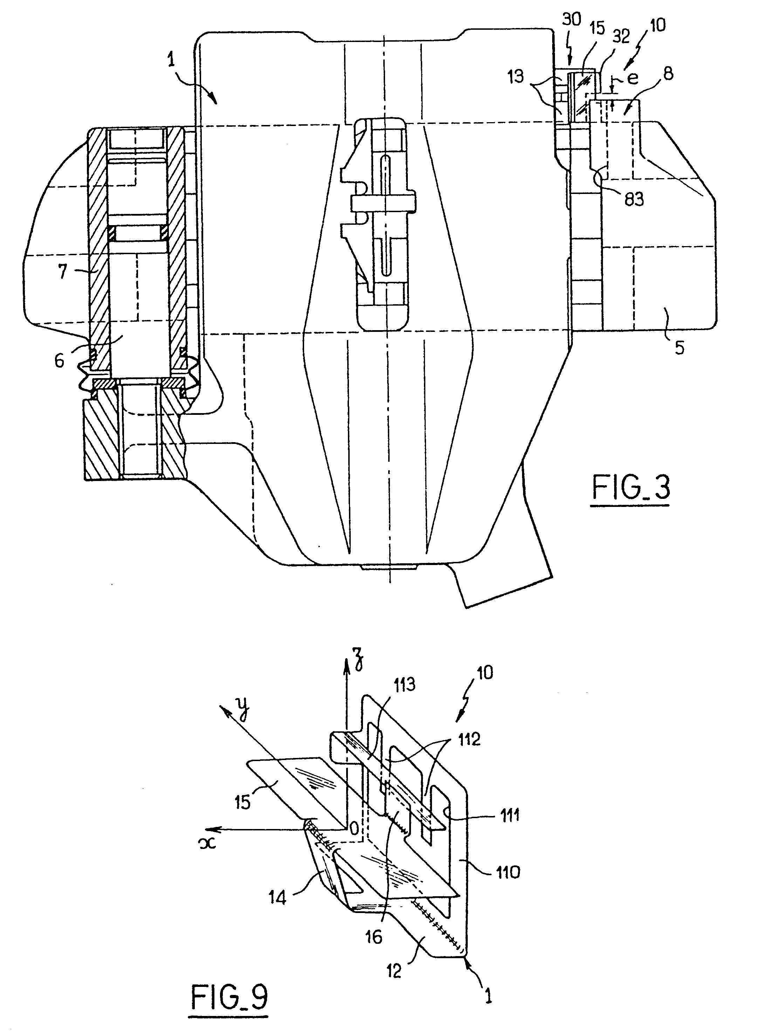

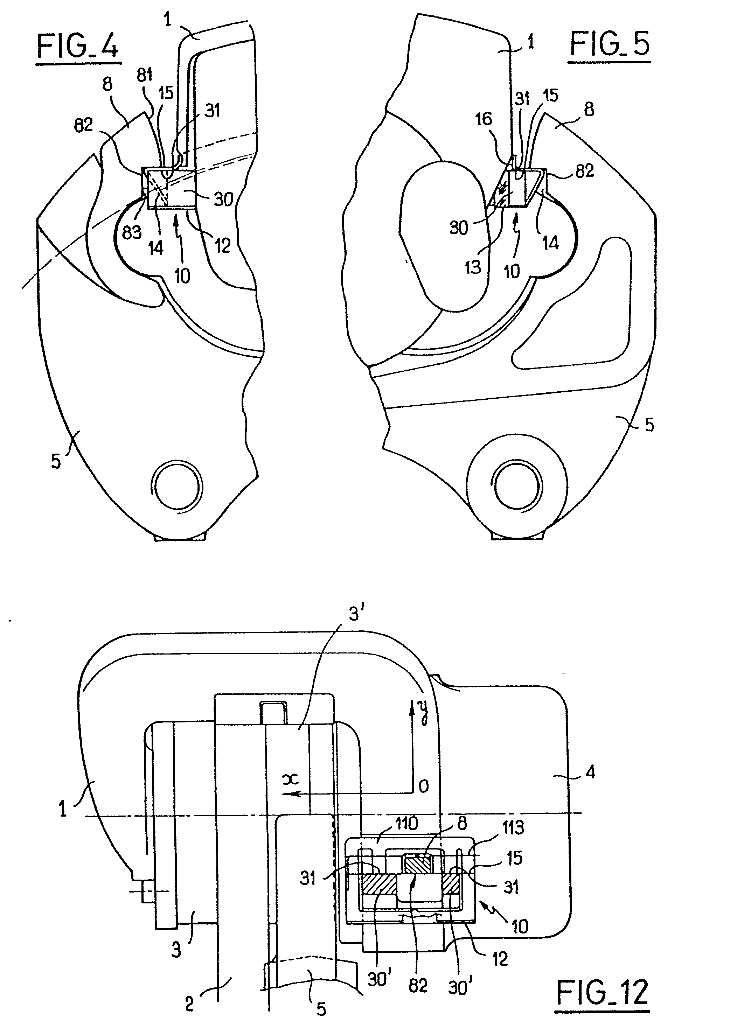

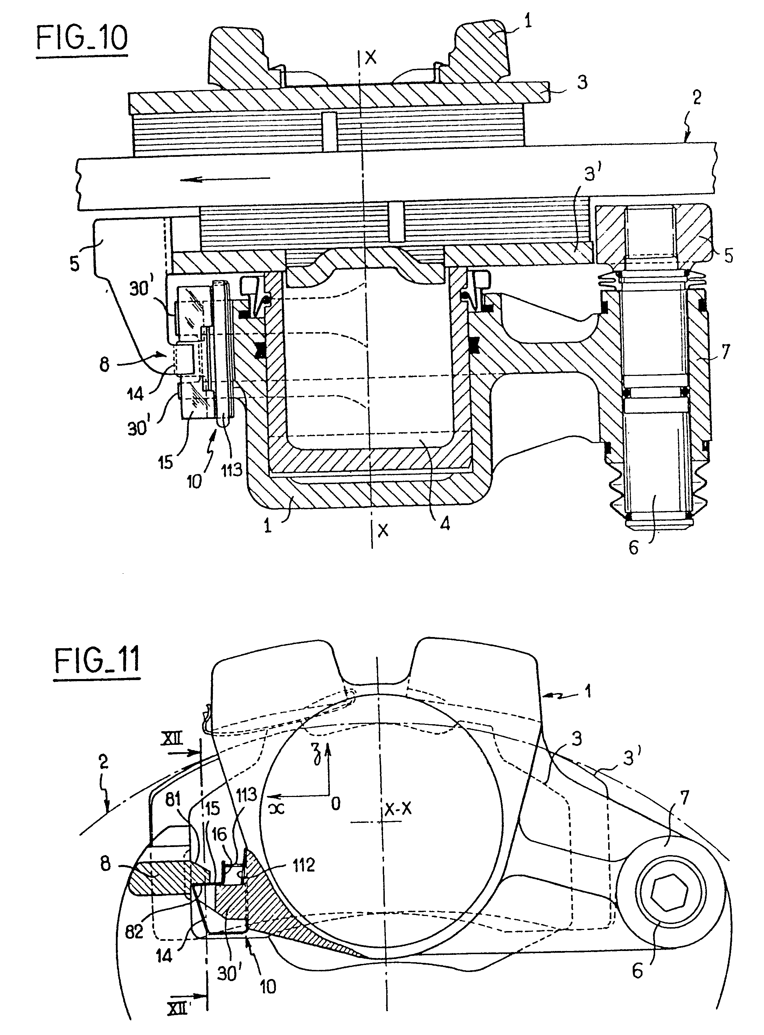

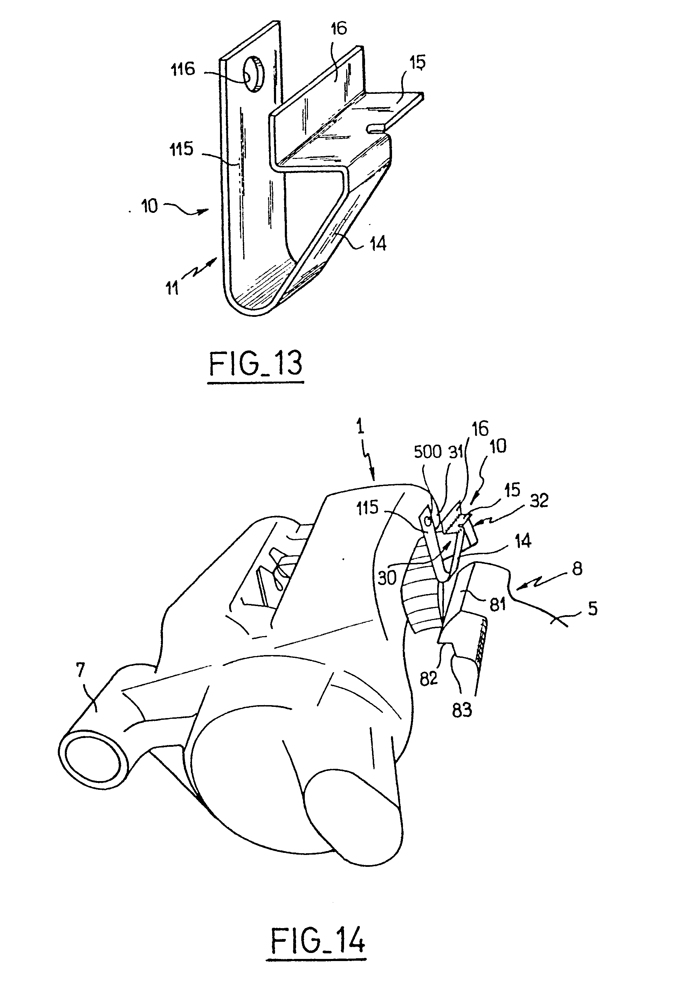

Dans le mode de réalisation représenté sur les Figures 9 à 12, la partie en saillie de l'étrier est divisée en deux portions 30′ distantes latéralement l'une de l'autre, la partie en saillie 8 du support fixe 5 présentant alors une largeur latérale réduite pour venir s'interposer, en position normale de fonctionnement, de l'étrier pourvu de garnitures neuves, entre ces deux portions 30′ en saillie de l'étrier, comme on le voit les Figures 10 et 12. L'élément de coulissement et de verrouillage 10 correspondant est adapté en conséquence. Il présente une partie de corps analogue à celle de la variante, de la Figure 8, la zône intermédiaire de lame flexible 14 étant formée centralement et la surface de lame plane 15 s'étendant latéralement symmétriquement de part et d'autre de cette zône intermédiaire flexible 14, comme on le voit bien sur la Figure 9. Dans ces conditions, comme il apparaît sur la Figure 12, en configuration initiale, la surface de lame de coulissement 15 coopère, à ses deux extrémités, par sa face inférieure avec les surfaces de coulissement supérieures 31 des deux portions 30′ de parties en saillie de l'étrier et, centralement, par sa face supérieure avec la face 82 de la partie en saillie 8 du support fixe 5. Selon un aspect de l'invention, la partie de corps 11 forme, dans ce mode de réalisation, une lame flexible 113 s'étendant parallèlement au plan de la surface de lame plane 15 entre la partie d'extrémité rabattue vers le haut 16 et le voile d'extrémité 110 de la partie de corps 11 pour assurer ainsi un blocage déverrouillable de la surface de lame plane 15 et empêcher un effacement intempestif de cette dernière. De fait, comme dans les modes de réalisation précédents, lors de la mise en place par basculement de l'étrier 1 vers sa position normale de fonctionnement, l'effacement de la surface de lame 15, résultant de la flexion de la zône intermédiaire de lame flexible 14 coopérant avec la partie en saillie 8 du support fixe 5, n'est permis qu'à condition que la lame de blocage 113 soit préalablement fléchie vers le haut pour permettre le débattement vers l'arrière de la partie d'extrémité 16 qui, sinon, viendrait immédiatement porter en butée contre la lame de blocage 113 dans sa position de repos.

On a représenté sur les Figures 13 et 14 un mode de réalisation simplifié de l'élément 10 selon l'invention. Dans cette variante, au lieu d'être monté élastiquement sur la partie en saillie 30 de l'étrier (qui se réduit, dans cette variante, à un parallélépipède de section correspondant à l'extrémité 32), l'élément 10 a une partie de corps 11 se réduisant à une lame 115 prolongeant la zône intermédiaire de lame flexible 14 et s'étendant dans un plan sensiblement perpendiculaire à celui de la surface de lame plane 15, cette lame 115 étant pourvue d'un trou 116 pour son montage sur l'extrémité de l'étrier 1 au moyen d'un clou cannelé 500.

Dans les différents modes de réalisation précédemment décrits, la partie d'extrémité 16 prolongeant la surface plane de coulissement 15 de l'élément 10 sert au déverrouillage de l'élément pour dégager par basculement l'étrier 1 du support fixe 5, par exemple pour l'inspection des patins ou leur remplacement. Ainsi, en prenant appui, par exemple au moyen d'un tournevis, entre le bord de la partie en saillie 8 du support 5 et cette partie d'extrémité 16 de l'élément 10, on peut ainsi pousser cette partie d'extrémité dans la direction vers l'étrier et dégager ainsi la surface de lame plane 15 de la face de coulissement 82 de la partie en saillie 8 du support 5 pour basculer l'étrier à l'écart de cette partie en saillie 8.

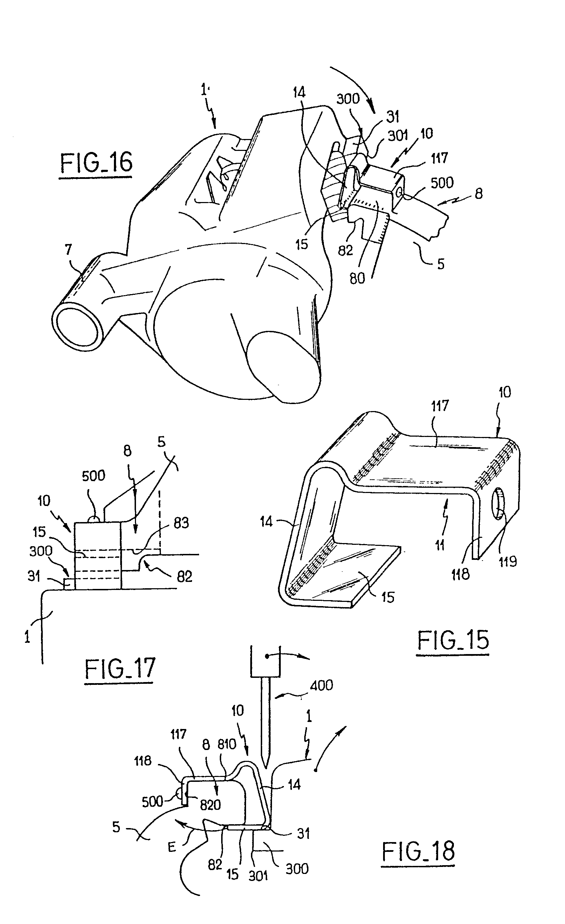

Dans le mode de réalisation représenté sur les Figures 15 à 18, l'élément de coulissement et de verrouillage 10 est cette fois monté sur la partie en saillie 8 de la structure support 5. A cette fin, la partie en saillie 8 comporte un bossage 80 s'étendant vers le haut et présentant une surface supérieure plane 810 parallèle au plan xy sus-mentionné et un épaulement arrière avec une face de montage 820 perpendiculaire à ladite face 810. Dans cette variante de réalisation, l'élément 10 comporte toujours une surface de lame plane 15 (dépourvue cette fois de partie d'extrémité rabattue 16) se raccordant par la zône intermédiaire 14 formant rampe flexible à une partie de corps 11 réduite à une surface plane 117 prolongée par une patte d'extrémité 118 rabattue vers le bas, perpendiculairement à cette dernière, en direction vers la surface plane de coulissement 15, et pourvue d'un trou 119. L'élément 10 est ainsi rapporté sur le bossage 80 avec la surface plane 117 portant contre la face supérieure 810 du bossage et la patte d'extrémité 118 portant contre la face arrière 820 du bossage auquel il est solidarisé par un clou cannelé 500 traversant le trou 119. Dans ce mode de réalisation comme on le voit bien sur les Figures 16 et 18, la partie en saillie 300 de l'étrier 1 ne comporte pas d'extrémité 32 se prolongeant latéralement, en position normale de départ, à côté de la partie en saillie 8 du support 5, cette partie en saillie 300 se réduisant à la partie d'emplanture de la partie en saillie 30 du mode de réalisation des Figures 1 à 7, c'est-à-dire ayant une extension réduite vers l'extérieur lui permettant de passer dans l'entrefer ménagé entre l'extrémité du corps de l'étrier 1 et le bord de la partie en saillie adjacente 8 du support 5. Dans ce mode de réalisation, lors de la mise en place par basculement de l'étrier dans sa position normale de fonctionnement, c'est le bord inférieur 301 de la partie en saillie 300 qui vient coopérer avec la zône de lame intermédiaire flexible 14 de l'élément 10 pour repousser la surface de lame plane 15 vers l'extérieur, sous la face de coulissement 82, comme figuré par la flèche E sur la Figure 18, après quoi, lorsque la surface supérieure de coulissement 31 de la partie en saillie 300 a dépassé le plan horizontal de la surface de lame 15, cette dernière recouvre sensiblement sa position initiale en formant clavette entre les surfaces de coulissement antagonistes 82 de la partie en saillie 8 du support 5 et 31 de la partie en saillie 300 de l'étrier 1 (lequel, contrairement au mode de réalisation précédent, ne vient plus, au fur et à mesure de l'usure des garnitures, s'engager sous cette face de coulissement 82 de la partie en saillie 8 du support 5). Comme illustré sur la Figure 18, pour déverrouiller l'étrier, il suffit, ici, d'engager un tournevis 400 entre la zône intermédiaire de lame flexible 14 et l'extrémité adjacente du corps d'étrier 1 pour repousser la surface de lame plane de coulissement et verrouillage 15 de l'organe 10 dans le sens de la Flèche E et permettre ainsi le basculement à l'écart du support 5 de l'étrier 1.

Quoique la présente invention ait été décrite en relation avec des modes de réalisation particuliers, elle ne s'en trouve pas limitée mais est au contraire susceptible de modifications et de variantes qui apparaîtront à l'homme de l'art.

**Revendications**

1. Elément de coulissement et de verrouillage élastique pour frein à disque du type à étrier flottant (1) monté à coulissement sur un support fixe (5) au moyen d'une colonnette axiale unique (6) solidaire de l'étrier ou du support fixe, l'élément (10) étant insérable entre une extrémité de l'étrier opposée à la colonnette et une partie adjacente (8) du support fixe en étant solidarisé à un premier organe de la paire d'organes constituée de cette extrémité de l'étrier et de cette partie adjacente du support fixe pour coopérer au guidage en coulissement de ces deux organes l'un par rapport à l'autre via une partie d'engagement (15) comportant des zones de contact opposées portant respectivement en contact contre des zones de coulissement adjacentes (31; 82) de chacun de ces deux organes dans la position normale de fonctionnement du frein, au moins cette partie d'engagement (15) étant susceptible d'être effacée élastiquement pour permettre le basculement de l'étrier (1) autour de la colonnette (6) au voisinage de cette position normale de fonctionnement, caractérisé en ce que l'élément (10) est réalisé à partir d'une feuille d'acier à ressort, la partie d'engagement étant constituée d'une surface de lame plane de coulissement (15), dont les faces opposées forment lesdites zones de contact, reliée à une extrémité d'une zone de lame intermédiaire (14) dont l'autre extrémité est reliée à une partie de corps (11) de l'élément (10) permettant sa solidarisation au premier organe, la zone de lame intermédiaire (14) formant surface de rampe inclinée flexible s'écartant de la partie de corps (11) et agencée de façon à coopérer avec le second organe pour réaliser automatiquement l'effacement de la partie d'engagement (15) dans la direction vers la partie de corps (11), lors du basculement de l'étrier (1) vers ladite position normale de fonctionnement.

2. Elément selon la revendication 1, caractérisé en ce que la partie d'engagement (15) s'étend à partir de l'extrémité de la zone de lame intermédiaire flexible (14) dans la direction vers la partie de corps (1).

3. Elément selon la revendication 1 ou la revendication 2, caractérisé en ce qu'il comprend une partie d'extrémité (16) prolongeant ladite partie d'engagement (15) à l'opposé de ladite zone de lame intermédiaire (14) et s'étendant suivant un angle par rapport à la partie d'engagement (15).

4. Elément selon la revendication 2, caractérisé en ce que la partie de corps (11) comprend une zone de voile (12; 117) adjacente à la zone de lame intermédiaire flexible (14) et s'étendant sensiblement parallèlement à la partie d'engagement (15).

5. Elément selon l'une des revendications 1 à 4, caractérisé en ce que la partie de corps (11) est conformée pour être montée à engagement élastique sur une partie en saillie (30; 300) du premier organe (1).

6. Elément selon l'une des revendications 3 à 5, caractérisé en ce que la partie de corps (11) comprend au moins une zône de lame d'extrémité (110; 115) s'étendant sensiblement parallèlement à ladite partie d'éxtrémité (16) prolongeant la partie d'engagement (15).

7. Elément selon l'une des revendications 3 à 6, caractérisé en ce qu'il comprend un moyen de blocage déverrouillable (113) s'opposant normalement à l'effacement de la partie d'engagement (15).

8. Elément selon la revendication 7, caractérisé en ce que la partie de corps (11) comprend une zône de lame transversale (113) s'étendant normalement entre ladite portion d'extrémité (16) prolongeant la partie d'engagement (15) et ladite zône de lame d'extrémité (110) de la partie de corps (11) et formant ledit moyen de blocage.

9. Frein à disque, du type comprenant un étrier flottant (1) monté à coulissement sur un support fixe (5) au moyen d'une colonnette axiale unique (6) solidaire de l'étrier ou du support fixe, et comportant un élément de coulissement et de verrouillage élastique (10) selon l'une des revendications 1 à 8, l'étrier (1) comportant une partie (30; 300) faisant saillie vers l'extérieur à partir de ladite extrémité de l'étrier au voisinage de ladite partie adjacente (8) du support fixe (5) et formant ladite zône de coulissement (31) de l'étrier, caractérisé en ce que la partie de corps (11) de l'élément (10) est montée sur ledit premier organe (1; 5) de façon que la zône intermédiaire formant surface de rampe inclinée (14) s'étende au voisinage de la partie en saillie (30; 300) de l'étrier dans la direction vers le second organe (5; 1).

10. Frein à disque selon la revendication 9, dans lequel ladite partie adjacente (8) du support fixe (5) comporte une face de coulissement (82) orientée vers l'axe du disque et constituant la zône de coulissement du support fixe, caractérisé en ce que l'élément (10) est monté sur le premier organe (1; 5) de façon que, au moins dans ladite position normale de fonctionnement, la partie d'engagement (15) de l'élément s'étende en contact avec ladite face de coulissement (82).

11. Frein à disque selon la revendication 10, dans lequel la partie en saillie (30; 30'; 300) de l'étrier (1) comporte une face supérieure (31) formant ladite zône de coulissement de l'extrémité de l'étrier, caractérisé en ce que, en position normale de fonctionnement, les zônes de coulissement (82; 31) des premiers et seconds organes portent contre les faces opposées de la partie d'engagement (15) de l'élément (10).

12. Frein à disque selon l'une des revendications 9 à 11, caractérisé en ce que le premier organe sur lequel est montée la partie de corps (11) de l'élément (10) est l'étrier (1).

13. Frein à disque selon la revendication 12, caractérisé en ce que la partie de corps (11) de l'élément (10) est montée sur la partie en saillie (30; 30') de l'étrier (1).

14. Frein à disque selon la revendication 13, comportant un élément selon la revendication 3, caractérisé en ce que la partie d'extrémité (16) de l'élément (10) s'étend le long du bord (81-82) de ladite partie adjacente (8) du support fixe (5) faisant face à ladite extrémité de l'étrier (1).

15. Frein à disque selon l'une des revendications 9 à 11, caractérisé en ce que le premier organe sur lequel est montée la partie de corps (11) de l'élément est le support fixe (5).

16. Frein à disque selon la revendication 12 ou la revendication 15, caractérisé en ce que la partie de corps (11) de l'élément (10) est fixée sur le premier organe par un clou cannelé (500).

**Patentansprüche**

1. Elastisches Gleit- und Verriegelungselement für eine Scheibenbremse mit einem Schwimmsattel (1), der auf einem Bremsträger (5) mittels eines einzigen axialen Bolzens (6) gleitend gelagert ist, der mit dem Schwimmsattel oder dem Bremsträger fest verbunden ist, wobei das Element (10) zwischen ein dem Bolzen gegenüberliegendes Ende des Schwimmsattels und einen angrenzenden Abschnitt (8) des Bremsträgers einsetzbar ist, indem es mit einem ersten Teil eines von diesem Schwimmsattelende und diesem angrenzenden Bremsträgerabschnitt gebildeten Paar von Teilen fest verbunden ist, um bei der gleitenden Führung dieser beiden Teile relativ zueinander mittels eines Anlageabschnittes (5) mitzuwirken, der entgegengerichtete Kontaktbereiche aufweist, die an angrenzenden Gleitbereichen (31; 82) jedes dieser beiden Teile in der normalen Betriebsstellung der Bremse jeweils anliegen, wobei mindestens dieser Anlageabschnitt (15) elastisch ausser Eingriff rückbar ist, um den Schwimmsattel (1) um den Bolzen (6) in Nähe dieser normalen Betriebsstellung kippen zu können, dadurch gekennzeichnet, dass das Element (10) aus einem Federstahlblatt hergestellt ist, wobei der Anlageabschnitt von einer ebenen Gleitlamellenfläche (15) gebildet wird, deren entgegengesetzte Seiten die besagten Kontaktbereiche bilden, und mit einem Ende eines Zwischenlamellenbereichs (14) verbunden ist, dessen anderes Ende mit einem Körperabschnitt (11) des Elementes (10) verbunden ist, was seine Befestigung an dem ersten Bauteil erlaubt, wobei der Zwischenlamellenbereich (14) eine flexible geneigte Rampenfläche bildet, die sich von dem Körperabschnitt (11) entfernt und so ausgebildet ist, dass die mit dem zweiten Bauteil zusammenwirkt, um bei einem Kippen des Schwimmsattels (1) in seine normale Betriebsstellung den Anlageabschnitt (15) in Richtung auf den Körperabschnitt (11) selbsttätig ausser Eingriff zu rücken.

2. Element nach Anspruch 1, dadurch gekennzeichnet, dass der Anlageabschnitt (15) sich von dem Ende des flexiblen Zwischenlamellenbereichs (14) in Richtung auf dem Körperabschnitt (11) erstreckt.

3. Element nach Anspruch 1 oder 2, dadurch gekennzeichnet, dass es einen Endabschnitt (16) aufweist, der den Anlageabschnitt (15) entgegengesetzt zu dem Zwischenlamellenbereich (14) verlängert und sich bezüglich des Anlageabschnitts (15) unter einem Winkel erstreckt.

4. Element nach Anspruch 2, dadurch gekennzeichnet, dass der Körperabschnitt (11) einen Flügelabschnitt (12; 117) aufweist, der an dem flexiblen Lamellenzwischenbereich angrenzt und im wesentlichen parallel zu dem Anlageabschnitt (15) verläuft.

5. Element nach einem der Ansprüche 1 bis 4, dadurch gekennzeichnet, dass der Körperabschnitt (11) aus ausgebildet ist, dass er mit elastischem Eingriff an einem vorspringenden Abschnitt (30; 300) des ersten Teils (1) anbringbar ist.

6. Element nach einem der Ansprüche 3 bis 5, dadurch gekennzeichnet, dass der Körperabschnitt (11) mindestens einen Endlamellenbereich (110; 115) aufweist, der sich im wesentlichen parallel zu dem den Anlageabschnitt (15) verlängernden Endabschnitt (16) erstreckt.

7. Element nach einem der Ansprüche 3 bis 6, dadurch gekennzeichnet, dass es ein lösbares Sicherungsmittel (113) aufweist, das sich normalerweise dem ausser Eingriff Rücken des Anlageabschnitts (15) widersetzt.

8. Element nach Anspruch 7, dadurch gekennzeichnet, dass der Körperabschnitt (11) einen quer verlaufenden Lamellenbereich (113) aufweist, der sich normalerweise zwischen dem den Anlageabschnitt (15) verlängernden Endabschnitt (16) und dem Endlamellenbereich (110) des Körperabschnittes (11) erstreckt und das Sicherungsmittel bildet.

9. Scheibenbremse mit einem Schwimmsattel (1), der an einem Bremsträger (15) mittels eines einzigen axialen Bolzens (6) gleitend gelagert ist, der am Schwimmsattel oder Bremsträger festgelegt ist und mit einem elastischen Gleit- und Verriegelungselement (10) nach einem der Ansprüche 1 bis 8, wobei der Schwimmsattel (1) einen Abschnitt (30; 300) aufweist, der von dem besagten Ende des Schwimmsattels benachbart zu dem angrenzenden Abschnitt (8) des Bremsträgers (5) nach aussen vorsteht und den Gleitbereich (31) des Schwimmsattels bildet, dadurch gekennzeichnet, dass der Körperabschnitt (11) des Elementes (10) an dem ersten Teil (1; 5) so angebracht ist, dass der die geneigte Rampenfläche bildende Zwischenbereich (14) benachbart zu dem vorspringenden Abschnitt (30; 300) des Schwimmsattels in Richtung auf das zweite Teil (5; 1) verläuft.

10. Scheibenbremse nach Anspruch 9, bei der der angrenzende Abschnitt (8) des Bremsträgers (5) eine Gleitfläche (82) aufweist, die zur Scheibenachse gerichtet ist und den Gleitbereich des Bremsträgers bildet, dadurch gekennzeichnet, dass das Element (10) an dem ersten Teil (1; 5) so angebracht ist, dass sich der Anlageabschnitt (15) des Elementes zumindest in der normalen Betriebsstellung in Anlage mit der Gleitfläche (82) befindet.

11. Scheibenbremse nach Anspruch 10, bei der der vorspringende Abschnitt (30; 30′; 300) des Schwimmsattels (1) eine obere Fläche (31) aufweist, die den Gleitbereich des Endes des Schwimmsattels bildet, dadurch gekennzeichnet, dass die Gleitbereiche (82; 31) des ersten und zweiten Teils in der normalen Betriebsstellung an den entgegengesetzen Seiten des Anlageabschnittes (15) des Elementes (10) anliegen.

12. Scheibenbremse nach einem der Ansprüche 9 bis 11, dadurch gekennzeichnet, dass das erste Teil, an dem der Körperabschnitt (11) des Elementes (10) angebracht ist, der Schwimmsattel (1) ist.

13. Scheibenbremse nach Anspruch 12, dadurch gekennzeichnet, dass der Körperabschnitt (11) des Elementes (10) an dem vorspringenden Abschnitt (30; 30′) des Schwimmsattels (1) angebracht ist.

14. Scheibenbremse nach Anspruch 13, mit einem Element nach Anspruch 3, dadurch gekennzeichnet, dass der Endabschnitt (16) des Elementes (10) entlang des Randes (81–82) des angrenzenden Abschnittes (8) des Bremsträgers (5) verläuft, der dem besagten Ende des Schwimmsattels (1) zugewandt ist.

15. Scheibenbremse nach einem der Ansprüche 9 bis 11, dadurch gekennzeichnet, dass das erste Teil, an dem der Körperabschnitt (11) des Elementes angebracht ist, der Bremsträger (5) ist.

16. Scheibenbremse nach Anspruch 12 oder 15, dadurch gekennzeichnet, dass der Körperabschnitt (11) des Elementes (10) an dem ersten Teil durch einen gerillten Stift (500) festgelegt ist.

## Claims

1. Resilient sliding and locking element for a disk brake of the type comprising a floating caliper (1) slidingly mounted on a fixed support (5) by means of a single axial column (6) fixed to the caliper or the fixed support, said element (10) being adapted to be inserted between an end of the caliper opposite to the column and an adjacent portion (8) of the fixed support by being connected to a first member of a pair of members comprised of said caliper end and said adjacent portion of the fixed support for cooperation with the sliding guiding of these two members with respect to each other by means of an engagement portion (15) comprising opposite contact zones being in contact with respective adjacent sliding zones (31; 82) of each of these two members in the normal operative position of the brake, at least said engagement portion (15) being adapted to be resiliently removed to permit the pivoting of the caliper (1) about the column (6) in the range of said normal operative position, characterized in that the element (10) is made from a spring steel leaf, the engagement portion being constituted by a plane sliding plate surface (15) having opposite faces forming said contact zones, and connected to an end of an intermediary plate zone (14), the other end of which is connected to a body portion (11) of the element (10) permitting its connection to said first member, the intermediary plate zone (14) forming a flexible inclined ramp surface diverging from the body portion (11) and adapted to cooperate with the second member for automatic removal of the engagement portion (15) towards the body portion (11) during pivoting of the caliper (11) towards the normal operative position.

2. Element according to claim 1, characterized in that the engagement portion (15) extends from the end of the flexible intermediary plate zone (14) towards the body portion (11).

3. Element according to claim 1 or claim 2, characterized in that it comprises an end portion (16) extending from said engagement portion (15) opposite to said intermediary plate zone (14) and extending under an angle with respect to the engagement portion (15).

4. Element according to claim 2, characterized in that the body portion (11) comprises a vane portion (12; 117) adjacent the flexible intermediary plate zone (14) and extending substantially parallel to the engagement portion (15).

5. Element according to any of claims 1 to 4, characterized in that the body portion (11) is arranged to be mounted for resilient engagement with a projecting portion (30; 300) of the first member (1).

6. Element according to any of claims 3 to 5, characterized in that the body portion (11) comprises at least one end plate zone (110; 115) extending substantially parallel to said end portion (16) extending from the engagement portion (15).

7. Element according to any of claims 3 to 6, characterized in that it comprises a disengageable locking means (113) normally opposing removal of the engagement portion (15).

8. Element according to claim 7, characterized in that the body portion (11) comprises a transverse plate zone (113) extending normally between said end portion (16) extending from the engagement portion (15) and said end plate zone (110) of the body portion (11) and forming said locking means.

9. Disk brake of the type comprising a floating caliper (1) slidingly mounted on a fixed support (5) by means of a single axial column (6) fixed to the caliper or the fixed support, and comprising a resilient sliding and locking element (10) according to any of claims 1 to 8, the caliper (1) comprising a portion (30; 300) projecting towards the exterior from said end of the caliper around said adjacent portion (8) of the fixed support (5) and forming said sliding zone (31) for the caliper, characterized in that the body portion (11) of the element (10) is mounted on said first member (1; 5) such that the intermediary zone forming an inclined ramp surface (14) extends adjacent the projecting portion (30; 300) of the caliper towards the second member (5; 1).

10. Disk brake according to claim 9, wherein said adjacent portion (8) of the fixed support (5) comprises a sliding face (82) oriented towards the axis of the disk and constituting the sliding zone of the fixed support, characterized in that the element (10) is mounted on the first member (1; 5) such that at least in said normal operative position the engagement portion (15) of the element is in contact with said sliding face (82).

11. Disk brake according to claim 10, wherein the projecting portion (30; 30′, 300) of the caliper (1) comprises an upper face (31) forming said sliding zone of the end of the caliper, characterized in that in the normal operative position the sliding zones (82; 31) of the first and second members engage the opposte faces of the engagement portion (15) of the element (10).

12. Disk brake according to any of claims 9 to 11, characterized in that the first member on which the body portion (11) of the element (10) is mounted is the caliper (1).

13. Disk brake according to claim 12, characterized in that the body portion (11) of the element (10) is mounted on the projecting portion (30; 30′) of the caliper (1).

14. Disk brake according to claim 13, comprising an element according to claim 3, characterized in that the end portion (16) of the element (10) extends along the edge (81–82) of said adjacent portion (8) of the fixed support (5) facing said end of the caliper (1).

15. Disk brake according to any of claims 9 to 11, characterized in that the first member on which the body portion (11) of the element is mounted is the fixed support (5).

16. Disk brake according to claim 12 or claim 15, characterized in that the body portion (11) of the element (10) is fixed on the first member by a channelled pin (500).

FIG_2
FIG_1
FIG_8
FIG_6
FIG_7

30
15
32
10
13
e
8
1
83
7
6
5
FIG_3
z
10
113
y
112
15
111
x
O
110
14
16
12
1
FIG_9

FIG_4
1
8
81
15
31
82
30
83
14
10
12
5
FIG_5
1
31
15
8
16
82
30
14
13
10
5
3'
y
x
O
4
1
110
8
113
15
31
31
10
3
12
2
30'
82
30'
5
FIG_12

FIG_10

1
XII
3
3'
2
113
7
15
81
0
X-X
16
112
8
82
14
6
30'
10
XII'

FIG_11

116
16
15
115
10
14
11

FIG_13

1
16
500
31
10
15
32
115
14
30
8
81
5
7
82
83

FIG_14

FIG_16
1'
14
300
31
301
10
117
500
8
7
15
82
80
5
FIG_17
8
5
500
10
15
83
300
31
82
1
FIG_15
117
10
14
11
118
119
15
FIG_18
400
10
1
117
8
810
118
14
500
820
5
E
31
82
15
301
300